# EUROPÄISCHE PATENTANMELDUNG

(11) **EP 4 191 890 A1**
(43) Veröffentlichungstag der Anmeldung: **07.06.2023**
(21) Anmeldenummer: 21211579.4
(22) Anmeldetag: 01.12.2021
(51) Int. Cl.: H04B 3/30, B23Q 17/00, B25F 5/00

(54) **WERKZEUGMASCHINE MIT EINEM KOMMUNIKATIONSSCHALTKREIS ZUR SERIELLEN DIGITALEN KOMMUNIKATION ZWISCHEN ZWEI TRANSCEIVERN, SOWIE SYSTEM**

(71) Anmelder: Hilti Aktiengesellschaft, 9494 Schaan (LI)
(72) Erfinder: Hauser, Klaus, 86830 Schwabmünchen (DE); Frenzel, Mathias, 86944 Unterdießen (DE); Hartmann, Markus, 87665 Mauerstetten (DE); Stanger, Robert, 87600 Kaufbeuren (DE)
(74) Vertreter: Hilti Aktiengesellschaft Corporate Intellectual Property

(57) **Zusammenfassung**

Die vorliegende Erfindung betrifft eine Werkzeugmaschine mit wenigstens einer Steuerungseinrichtung, wobei wenigstens ein Kommunikationsschaltkreis zum Austausch von Signalen zwischen einem ersten Transceiver und einem zweiten Transceiver mit mindestens einer Kommunikationsleitung für eine serielle digitale Kommunikation vorgesehen ist. In einem zweiten Aspekt betrifft die Erfindung ein System, das eine solche Werkzeugmaschine und eine Energieversorgungsvorrichtung umfasst.

## Beschreibung

Die vorliegende Erfindung betrifft eine Werkzeugmaschine mit wenigstens einer Steuerungseinrichtung, wobei wenigstens ein Kommunikationsschaltkreis zum Austausch von Signalen zwischen einem ersten Transceiver und einem zweiten Transceiver mit mindestens einer Kommunikationsleitung für eine serielle digitale Kommunikation vorgesehen ist. In einem zweiten Aspekt betrifft die Erfindung ein System, das eine solche Werkzeugmaschine und eine Energieversorgungsvorrichtung umfasst.

### Hintergrund der Erfindung:

Moderne Werkzeugmaschinen, wie beispielsweise Bohrhämmer, Sägen, Schleifgeräte oder dergleichen, verfügen mittlerweile über zahlreiche Komponenten (z.B. Motoreinheit, Getriebeeinheit, Transceiver, Mikrocontroller, etc.), welche eine Vielzahl an Informationen und Daten in Form von Signalen miteinander austauschen. Insbesondere zwischen einer Werkzeugmaschine und einem als Energieversorgung vorgesehenen Akkumulator findet mittlerweile ein hoher Informations- und Datenaustausch statt.

Zum Datenaustausch (d.h. Senden und Empfangen von Informationen) dienen verschiedene Kommunikationsnetzwerke bzw. Kommunikationsschaltkreise. Die Kommunikation zwischen den einzelnen Komponenten, d.h. der Datenaustausch, funktioniert für gewöhnlich ohne Probleme, wenn sich die Werkzeugmaschine in einem Ruhezustand befindet. In dem Ruhezustand ist die Werkzeugmaschine nicht aktiviert und nur relativ wenig elektrische Energie (d.h. niedrige Stromwerte bzw. Stromstärke) wird dem Antrieb zugeführt.

Im Gegensatz dazu wird in einem Arbeitsmodus der Werkzeugmaschine relativ viel elektrische Energie (d.h. hohe Stromwerte bzw. Stromstärke) zugeführt, um eine hohe Leistungsabgabe der Werkzeugmaschine zu erzeugen.

Durch hohe Stromwerte und vor allem sich relativ schnell verändernde Stromwerte (d.h. eine starke Fluktuation) entsteht jedoch eine ungewollte Störeinkopplung (beispielsweise induktive Einkopplung, kapazitive Einkopplung, elektromagnetische Strahlung und/oder leitungsgebundene Störungen) auf benachbarte Signalleitung in dem Kommunikationsnetzwerk. Da die technischen Maßnahmen für eine geeignete Störunempfindlichkeit an den Kommunikationsnetzwerken für gewöhnlich einen hohen Aufwand und gestiegene Kosten verursachen, wird als Folge hieraus auf eine Kommunikation zwischen den Komponenten während des Betriebs (d.h. im Aktivierungsmodus) der Werkzeugmaschine verzichtet.

Aufgabe der vorliegenden Erfindung ist es daher, eine Werkzeugmaschine und ein System umfassend eine Werkzeugmaschine und eine Energieversorgungsvorrichtung bereitzustellen, mit dem das vorstehend genannte Problem gelöst und eine robuste Kommunikation während des Betriebs der Werkzeugmaschine bzw. des Systems erreicht werden kann.

Die Aufgabe wird gelöst durch den Gegenstand der unabhängigen Ansprüche. Weitere vorteilhafte Ausgestaltungsformen der Erfindung finden sich in den entsprechenden Unteransprüchen.

### Beschreibung der Erfindung:

Erfindungsgemäß ist eine Werkzeugmaschine mit wenigstens einer Steuerungseinrichtung vorgesehen, wobei wenigstens ein Kommunikationsschaltkreis zum Austausch von Signalen zwischen einem ersten Transceiver und einem zweiten Transceiver mit mindestens einer Kommunikationsleitung für eine serielle digitale Kommunikation vorgesehen ist. Hierdurch wird eine robuste und störunempfindliche Kommunikation auch während des Betriebs der Werkzeugmaschine ermöglicht. Die serielle Kommunikation ist vorzugsweise dadurch gekennzeichnet, dass einzelne Datenbits hintereinander versendet bzw. übertragen werden können. Tests haben gezeigt, dass mit der Erfindung vor allem sicherheitsrelevante Funktionen der Werkzeugmaschine besser umgesetzt werden können als bei konventionellen Werkzeugmaschinen, wie sie aus dem Stand der Technik bekannt sind.

Es ist im Sinne der Erfindung bevorzugt, dass die Werkzeugmaschine lösbar mit einer Energieversorgungsvorrichtung verbindbar ist, wobei die Energieversorgungsvorrichtung dazu eingerichtet ist, die Werkzeugmaschine mit elektrischer Energie zu versorgen. Die Energieversorgungsvorrichtung kann vorzugsweise einen Akkumulator ("Akku") umfassen oder von einem Akkumulator gebildet werden, so dass die Begriffe "Energieversorgungsvorrichtung" und "Akkumulator" im Kontext der vorliegenden Erfindung synonym verwendet werden. Es ist im Sinne der Erfindung ganz besonders bevorzugt, dass der erste Transceiver in der Werkzeugmaschine und der zweite Transceiver in der Energieversorgungsvorrichtung positioniert ist. Mit anderen Worten kann der erste Transceiver bzw. der erste Kommunikationspartner der seriellen, digitalen Kommunikation, Bestandteil der Werkzeugmaschine sein, während der zweite Transceiver bzw. der zweite Kommunikationspartner der seriellen, digitalen Kommunikation bevorzugt in der Energieversorgungsvorrichtung integriert vorliegt. Somit können mit der Erfindung Signale und/oder Daten zwischen einer Werkzeugmaschine und einer Energieversorgungsvorrichtung besonders störungsresistent ausgetauscht werden.

Es kann im Sinne der Erfindung auch bevorzugt sein, dass beide Transceiver in der Werkzeugmaschine angeordnet vorliegen.

Es ist im Sinne der Erfindung bevorzugt, dass der Austausch von Signalen in einem Halbduplex-Betrieb oder in einem Vollduplex-Betrieb erfolgt. Darüber hinaus kann der Austausch von Signalen massebezogen oder im Rahmen einer differentiellen Kommunikation erfolgen. Es ist im Sinne der Erfindung bevorzugt, dass der Kommunikationsschaltkreis Masseleitungen aufweist, die vorzugsweise niederohmige Verbindungen darstellen, mit denen Potentialdifferenzen zwischen den Transceivern ausgeglichen werden können. Der Begriff "massebezogen" ist im Sinne der Erfindung so zu verstehen, dass ein Kommunikationssignal massebezogen ist, wenn die Spannung gegenüber einem Massepotential gemessen wird, vorzugsweise einem gemeinsame Massepotential. Dabei wird im Kontext der vorliegenden Erfindung vorzugsweise der Minuspol der Energieversorgungsvorrichtung der Werkzeugmaschine als gemeinsames Massepotential verwendet.

Vorzugsweise kann der Kommunikationsschaltkreis der Werkzeugmaschine zwei Kommunikationsleitungen umfassen, wenn die Kommunikation zwischen den Transceivern massebezogen ist und auf einer Vollduplex-Technologie beruht. Vorzugsweise kann der Kommunikationsschaltkreis der Werkzeugmaschine vier Kommunikationsleitungen umfassen, wenn die Kommunikation zwischen den Transceivern im Rahmen einer differentiellen Kommunikation erfolgt und auf einer Vollduplex-Technologie beruht. Vorzugsweise kann der Kommunikationsschaltkreis der Werkzeugmaschine eine Kommunikationsleitung umfassen, wenn die Kommunikation zwischen den Transceivern massebezogen ist und auf einer Halbduplex-Technologie beruht. Vorzugsweise kann der Kommunikationsschaltkreis der Werkzeugmaschine zwei Kommunikationsleitungen umfassen, wenn die Kommunikation zwischen den Transceivern im Rahmen einer differentiellen Kommunikation erfolgt und auf einer Halbduplex-Technologie beruht.

Bei den Signalen, die zwischen den Transceivern ausgetauscht werden, kann es sich vorzugsweise um physikalische Signale, wie massebezogene Spannungssignale, differentielle Spannungssignale und/oder Stromsignale, handeln.

Bei massebezogenen Signalen sind je nach Kommunikationsverfahren Signalpegel von - 3 V bis - 15 V in einem ersten Zustand A und 3 V bis 15 V in einem zweiten Zustand B bevorzugt. In einem anderen Verfahren können Signalpegel zwischen 2 und 10 V in einem ersten Zustand A und zwischen -0,4 V und 0,8 V in einem zweiten Zustand B bevorzugt sein. Die Zustände A und B und die Zustände HZ und NZ bezeichnen im Sinne der Erfindung diejenigen zwei binären Zustände, in denen ein digitales Signal vorliegen kann. Es ist im Sinne der Erfindung bevorzugt, dass bei der seriellen Kommunikation diese Bits oder Zustände in einem bestimmten zeitlichen Abstand aneinandergereiht bzw. aneinandergehängt versendet werden.

Es ist im Sinne der Erfindung bevorzugt, dass eine erste Differenzspannung bei der differentiellen Kommunikation für einen ersten Zustand (HZ) zwischen -20 V bis 1 Volt liegt und eine zweite Differenzspannung für einen zweiten Zustand zwischen 1,5 bis 20 Volt liegt.

Der erste Zustand bei der differentiellen Kommunikation kann auch als dominanter oder hoher Zustand bezeichnet werden. Des Weiteren kann der zweite Zustand bei der differentiellen Kommunikation auch als rezessiver oder niedriger Zustand bezeichnet werden.

Entsprechend einer vorteilhaften Ausführungsform der vorliegenden Erfindung kann es möglich sein, dass wenigstens ein Akkumulator als Energieversorgung der Werkzeugmaschine vorgesehen ist, wobei die Energieversorgungsvorrichtung ein Massepotential aufweist. Das Massepotential der Energieversorgungsvorrichtung kann vorzugsweise auch als Ground, Potential Null oder Masse bezeichnet werden.

Es ist im Sinne der Erfindung bevorzugt, dass eine Datenübertragungsrate in einem Bereich von 9,6 KBit/s bis 5 MBit/s liegt. Tests haben gezeigt, dass eine Datenübertragungsrate in einem Bereich von 9,6 KBit/s bis 5 MBit/s eine effiziente und robuste Kommunikation zwischen einer Werkzeugmaschine und einer Energieversorgungsvorrichtung ermöglicht, selbst dann, wenn die Werkzeugmaschine in Betrieb und ggf. starken Vibrationen und Erschütterungen ausgesetzt ist. Solche starken Vibrationen und Erschütterungen können insbesondere bei besonders leistungsstarken Werkzeugmaschinen auftreten.

Es ist im Sinne der Erfindung bevorzugt, dass ein Widerstand der mindestens einen Kommunikationsleitung kleiner als 1 Ohm ist. Dies gilt insbesondere dann, wenn die serielle digitale Kommunikation drahtgebunden erfolgt. Es hat sich gezeigt, dass es vorteilhaft ist, bei einer drahtgebundenen Kommunikation den Widerstand der Kommunikationsleitung einschließlich etwaiger Steckverbindungen kleiner als 1 Ohm zu halten.

Die serielle digitale Kommunikation kann beispielsweise auf einer Nahfeld-Kommunikation beruht. Dies gilt insbesondere dann, wenn die serielle digitale Kommunikation drahtlos ausgebildet ist. Wenn die serielle digitale Kommunikation drahtlos ausgebildet ist, kann es bevorzugt sein, dass eine Antennenfläche des ersten Transceivers und/oder des zweiten Transceivers in einem Bereich von 4 cm² bis 20 cm² liegt. Dadurch wird eine besonders stabile Kommunikation zwischen den beteiligten Kommunikationspartnem ermöglicht. Wenn die die serielle digitale Kommunikation drahtlos ausgebildet ist, kann es darüber hinaus bevorzugt sein, dass ein Abstand zwischen Antennen des ersten Transceivers und Antennen des zweiten Transceivers kleiner als 4 cm ist. Mit anderen Worten liegen die Antennen des ersten Transceivers weniger als 4 cm beabstandet von den Antennen des zweiten Transceivers angeordnet vor. Wenn der erste Transceiver an der Werkzeugmaschine angeordnet vorliegt und der zweite Transceiver Bestandteil der Energieversorgungsvorrichtung ist, liegen die Antennen der beiden Transceiver weniger als 4 cm auseinander angeordnet vor.

Es ist im Sinne der Erfindung bevorzugt, dass die Kommunikationsleitungen zwischen den Transceivern miteinander verdrillt vorliegen, wenn mehr als eine Kommunikationsleitung für die serielle digitale Kommunikation zwischen den Transceivern des Kommunikationssystems verwendet wird und wenn die Kommunikation leitungsgebunden erfolgt. Durch die Verdrillung können wechselseitige Signaleinkopplungen zwischen den Kommunikationsleitungen ausgeglichen bzw. vermieden werden.

Es ist im Sinne der Erfindung bevorzugt, dass Abstände zwischen Leitungskreuzungspunkten zwischen den Kommunikationsleitungen in einem Bereich von 5 mm bis 25 mm liegen, wenn mehr als eine Kommunikationsleitung für die serielle digitale Kommunikation verwendet wird. Die genannten Abstände zwischen den Leitungskreuzungspunkten können vorteilhafterweise einen Beitrag dazu leisten, dass die Kommunikation zwischen den Transceivern noch robuster gegenüber Signalstörungen ist. Insbesondere kann durch die genannten Abstände zwischen den Leitungskreuzungspunkten eine besonders robuste Kommunikation zwischen einer besonders leistungsstarken Werkzeugmaschine und einer Energieversorgungsvorrichtung, die vorzugsweise in der Lage ist, Abgabeströme in einem Bereich von mehr als 50 Ampère (A), bevorzugt mehr als 70 A und am meisten bevorzugt von mehr von 100 A abzugeben.

Es ist im Sinne der Erfindung bevorzugt, dass eine Fläche, die von den Kommunikationsleitungen umschließbar ist, kleiner als 20 cm² ist, wenn mehr als eine Kommunikationsleitung für die serielle digitale Kommunikation verwendet wird. Durch dergestalt kleine, durch die Kommunikationsleitungen umschlossene Flächen, kann eine induktive Einkopplung von Störungen auf ein Mindestmaß reduziert werden, so dass die Kommunikation zwischen den beteiligten Systempartnern - zum Beispiel Werkzeugmaschine und Energieversorgungsvorrichtung - besonders robust und wenig störanfällig sein kann.

Die erste und die zweite Kommunikationsleitung für eine differentielle Kommunikation zwischen der Energieversorgungsvorrichtung und der Werkzeugmaschine sind Bestandteile eines Kommunikationssystems. Das Kommunikationssystem kann dabei als CAN-Datenbus ausgestaltet sein. Es ist jedoch auch möglich, dass ein anderes geeignetes Kommunikationssystem für eine differentielle Kommunikation zwischen dem Akkumulator und der Werkzeugmaschine verwendet wird.

Neben der Werkzeugmaschine wird ein System offenbart, dass eine Werkzeugmaschine mit wenigstens einer Steuerungseinrichtung und eine Energieversorgungsvorrichtung mit wenigstens einer Steuerungselektronik umfasst, wobei die Energieversorgungsvorrichtung zur Versorgung der Werkzeugmaschine mit elektrischer Energie ausgestaltet ist. Es ist im Sinne der Erfindung bevorzugt, dass die Systembeteiligten - Werkzeugmaschine und Energieversorgungsvorrichtung - auf die zuvor beschriebene Weise miteinander kommunizieren und Daten austauschen können. Dabei kann ein Kommunikationsschaltkreis zum Austausch von Signalen zwischen einem ersten Transceiver und einem zweiten Transceiver vorgesehen sein, wobei der Kommunikationsschaltkreis wenigstens eine Kommunikationsleitung zur Durchführung einer seriellen digitalen Kommunikation umfasst. Es ist im Sinne der Erfindung bevorzugt, dass der wenigstens erste Transceiver in der Werkzeugmaschine und der wenigstens zweite Transceiver in der Energieversorgungsvorrichtung positioniert ist. Mithin ist die vorgeschlagene transceiverbasierte Kommunikation besonders geeignet für die Kommunikation zwischen besonders leistungsstarken Werkzeugmaschinen und Energieversorgungsvorrichtungen, wie im Folgenden beschrieben werden.

Die Erfindung kann ihre Vorteilhaftigkeit vor allem dann voll entfalten, wenn sie in Verbindung mit neuen und zukünftigen Batterie- oder Zelltechnologien verwendet wird. Denn es ist zu erwarten, dass neue Batterietechnologien Energieversorgungsvorrichtung mit längeren Lebenszeiten und höheren Abgabeströmen hervorbringen werden. Beispielsweise können die Energievorrichtungen dazu eingerichtet sein, Ströme in einem Bereich von mehr als 50 Ampère (A), bevorzugt mehr als 70 A und am meisten bevorzugt von mehr als 100 A abgeben zu können. Bei den Strömen handelt es sich vorzugsweise um Konstant-Ströme. Vorteilhafterweise kann mit der Erfindung eine technische Lösung für die Kommunikation einer solchen Energieversorgungsvorrichtung mit einer Werkzeugmaschine bereitgestellt werden. Es wird im Kontext der Erfindung eine Energieversorgungsvorrichtung offenbart, die zusammen mit einer erfindungsgemäßen Werkzeugmaschine ein System bilden kann. Mit anderen Worten kann die Energieversorgungsvorrichtung in dem vorgeschlagenen System verwendet werden. Dabei kann die Energieversorgungsvorrichtung vorzugsweise die folgenden Merkmale aufweisen:

Bei der Energieversorgungsvorrichtung handelt es sich vorzugsweise um eine Energieversorgungsvorrichtung mit einer besonders hohen Lebensdauer und/oder um eine Energieversorgungsvorrichtung, die dazu eingerichtet ist, besonders hohe Ströme, insbesondere Konstant-Ström von mehr als 50 Ampère, bevorzugt mehr als 70 Ampère und am meisten bevorzugt von mehr als 100 Ampère, abzugeben.

Es ist im Sinne der Erfindung bevorzugt, dass die Energieversorgungsvorrichtung mindestens einer Energiespeicherzelle («Zelle») umfasst, wobei die mindestens eine Zelle einen Innenwiderstand DCR_I von kleiner als 10 Milliohm (mOhm) aufweist. In bevorzugten Ausgestaltungen der Erfindung kann der Innenwiderstand DCR_I der mindestens einen Zelle kleiner als 8 Milliohm und bevorzugt kleiner 6 Milliohm sein. Dabei wird der Innenwiderstand DCR_I vorzugsweise nach der Norm IEC61960 gemessen. Der Innenwiderstand DCR_I stellt insbesondere den Widerstand einer Zelle der Energieversorgungsvorrichtung dar, wobei etwaige Komponenten oder Zubehörteile der Zelle keinen Beitrag zum Innenwiderstand DCR_I leisten. Ein geringer Innenwiderstand DCR_I ist von Vorteil, da dadurch unerwünschte Wärme, die abgeführt werden muss, überhaupt nicht entsteht. Der Innenwiderstand DCR_I ist insbesondere ein Gleichstrom-Widerstand, der im Inneren einer Zelle der vorgeschlagenen Energieversorgungsvorrichtung gemessen werden kann. Selbstverständlich kann der Innenwiderstand DCR_I auch Zwischenwerte, wie 6,02 Milliohm; 7,49 Milliohm; 8,33 Milliohm; 8,65 Milliohm oder 9,5 Milliohm, annehmen.

Es hat sich gezeigt, dass mit dem Innenwiderstand DCR_I der mindestens einen Zelle von kleiner als 10 Milliohm eine Energieversorgungsvorrichtung bereitgestellt werden kann, die besonders gute thermische Eigenschaften in dem Sinne aufweist, dass sie besonders gut bei niedrigen Temperaturen betrieben werden kann, wobei der Kühlaufwand überraschend gering gehalten werden kann. Insbesondere ist eine Energieversorgungsvorrichtung mit einem Zell-Innenwiderstand DCR_I von kleiner als 10 Milliohm besonders gut geeignet, um besonders leistungsstarke Werkzeugmaschinen mit elektrischer Energie zu versorgen. Solche Energieversorgungsvorrichtungen können somit einen wertvollen Beitrag dazu leisten, einen Einsatz von akkubetriebenen Werkzeugmaschinen auch in solchen Anwendungsgebieten zu ermöglichen, von denen die Fachwelt bisher davon ausgegangen war, dass diese Anwendungsgebiete akkubetriebenen Werkzeugmaschinen nicht zugänglich sind.

Vorteilhafterweise kann mit eine solchen Energieversorgungsvorrichtung eine Möglichkeit dafür geschaffen werden, eine batterie- oder akkubetriebene Werkzeugmaschine mit einer erfindungsgemäßen Energieversorgungsvorrichtung über einen langen Zeitraum mit einer hohen Abgabeleistung zu versorgen, ohne die umliegenden Kunststoffbauteile oder die Zellchemie innerhalb der Zellen der Energieversorgungsvorrichtung zu schädigen.

Es ist im Sinne der Erfindung bevorzugt, dass ein Verhältnis eines Widerstands der mindestens einen Zelle zu einer Oberfläche A der mindestens einen Zelle kleiner als 0,2 Milliohm/cm² ist, bevorzugt kleiner als 0,1 Milliohm/cm² und am meisten bevorzugt kleiner als 0,05 Milliohm/cm². Bei einer zylindrischen Zelle kann die Oberfläche der Zelle beispielsweise von der Außenfläche des Zylinders, sowie der Oberseite und der Unterseite der Zelle gebildet werden. Es kann darüber hinaus im Sinne der Erfindung bevorzugt sein, dass ein Verhältnis eines Widerstands der mindestens einen Zelle zu einem Volumen V der mindestens einen Zelle kleiner als 0,4 Milliohm/cm³ ist, bevorzugt kleiner als 0,3 Milliohm/cm³ und am meisten bevorzugt kleiner als 0,2 Milliohm/cm³. Der Fachmann kennt für übliche geometrische Formen, wie Quader, Würfel, Kugel oder dergleichen, die Formeln zur Berechnung der Oberfläche oder des Volumens eines solchen geometrischen Körpers. Der Begriff «Widerstand» bezeichnet im Sinne der Erfindung bevorzugt den Innenwiderstand DCR_I, der vorzugsweise nach der Norm IEC61960 gemessen werden kann. Vorzugsweise handelt es sich dabei um einen Gleichstrom-Widerstand.

Es ist im Sinne der Erfindung bevorzugt, dass die mindestens eine Zelle einen Erwärmungskoeffizienten von kleiner als 1,0 W/(Ah·A) aufweist, bevorzugt kleiner als 0,75 W/(Ah·A) und besonders bevorzugt von kleiner als 0,5 W/(Ah·A). Darüber hinaus kann die mindestens eine Zelle dazu ausgebildet sein, im Wesentlichen konstant einen Strom von größer als 1.000 Ampère/Liter abzugeben. Die Angabe des Entladestroms erfolgt in Bezug auf das Volumen der mindestens einen Zelle, wobei als Einheit für das Volumen die Raum-Maßeinheit «Liter» (I) verwendet wird. Die erfindungsgemäßen Zellen sind somit in der Lage, pro Liter Zellvolumen einen Entladestrom von im Wesentlichen konstant größer als 1.000 A abzugeben. Mit anderen Worten ist eine Zelle mit einem Volumen von 1 Liter in der Lage, einen im Wesentlichen konstanten Entladestrom von größer als 1.000 A abzugeben, wobei die mindestens eine Zelle darüber hinaus einen Erwärmungskoeffizienten von kleiner als 1,0 W/(Ah·A) aufweist. In bevorzugten Ausgestaltungen der Erfindung kann die mindestens eine Zelle der vorgeschlagenen Energieversorgungsvorrichtung einen Erwärmungskoeffizienten von kleiner als 0,75 W/(Ah·A), bevorzugt kleiner als 0,5 W/ (Ah·A) aufweisen. Die Einheit des Erwärmungskoeffizienten lautet Watt / (Ampèrestunden · Ampère). Selbstverständlich kann der Erwärmungskoeffizient auch Zwischenwerte, wie 0,56 W/(Ah.A); 0,723 W/(Ah.A) oder 0,925 W/(Ah.A) aufweisen.

Die Erfindung ermöglicht vorteilhafterweise die Bereitstellung einer Energieversorgungsvorrichtung mit mindestens einer Zelle, die eine verringerte Erwärmung aufweist und somit besonders gut für die Versorgung von Werkzeugmaschine geeignet ist, bei denen hohe Leistungen und hohe Ströme, vorzugsweise Konstant-Ströme, für den Betrieb erwünscht sind. Insbesondere kann mit der Erfindung eine Energieversorgungsvorrichtung für eine Werkzeugmaschine bereitgestellt werden, bei der die Wärme, die gegebenenfalls bei Betrieb der Werkzeugmaschine und bei Abgabe von elektrischer Energie an die Werkzeugmaschine entsteht, besonders einfach und unkompliziert abgeführt werden kann. Tests haben gezeigt, dass mit der Erfindung nicht nur vorhandene Wärme besser abgeführt werden kann. Vielmehr wird mit der Erfindung verhindert, dass Wärme entsteht bzw. die bei Betrieb der Werkzeugmaschine erzeugte Wärmemenge kann mit der Erfindung erheblich reduziert werden. Vorteilhafterweise kann mit der Erfindung eine Energieversorgungsvorrichtung bereitgestellt werden, die vor allem auch solche Werkzeugmaschine optimal mit elektrischer Energie versorgen kann, die hohe Anforderungen an Leistung und Entladestrom stellen. Mit anderen Worten kann mit der Erfindung eine Energieversorgungsvorrichtung für besonders leistungsstarke Werkzeugmaschine bereitgestellt werden, mit denen beispielsweise auf Baustellen schwere Bohr- oder Abbrucharbeiten verrichtet werden.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind. Die Werkzeugmaschine kann beispielsweise auch ein Ladegerät für die Energieversorgungsvorrichtung sein.

Es ist im Sinne der Erfindung bevorzugt, dass die mindestens eine Zelle eine Temperatur-Abkühl-Halbwertzeit kleiner als 12 Minuten aufweist, bevorzugt kleiner 10 Minuten, besonders bevorzugt kleiner 8 Minuten. Das bedeutet im Sinne der Erfindung bevorzugt, dass sich bei freier Konvektion eine Temperatur der mindestens einen Zelle in weniger als 12, 10 oder 8 min halbiert. Die Temperatur-Abkühl-Halbwertzeit wird vorzugsweise in einem Ruhezustand der Energieversorgungsvorrichtung ermittelt, d.h. wenn die Energieversorgungsvorrichtung nicht in Betrieb, d.h. mit einer Werkzeugmaschine verbunden vorliegt. Vor allem Energieversorgungsvorrichtungen mit Temperatur-Abkühl-Halbwertzeiten von kleiner als 8 min haben sich als besonders geeignet für den Einsatz bei leistungsstarken Werkzeugmaschinen gezeigt. Selbstverständlich kann die Temperatur-Abkühl-Halbwertzeit auch einen Wert von 8,5 Minuten, 9 Minuten 20 Sekunden oder von 11 Minuten 47 Sekunden aufweisen.

Durch die überraschend geringe Temperatur-Abkühl-Halbwertzeit der vorgeschlagenen Energieversorgungsvorrichtung verweilt die im Betrieb der Werkzeugmaschine oder bei ihrem Laden erzeugte Wärme nur für kurze Zeit innerhalb der mindestens einen Zelle. Auf diese Weise kann die Zelle besonders schnell wieder aufgeladen werden und steht zügig für einen erneuten Einsatz in der Werkzeugmaschine zur Verfügung. Vielmehr kann die thermische Belastung der Komponente der Energieversorgungsvorrichtung oder der Werkzeugmaschine mit der vorgeschlagenen Energieversorgungsvorrichtung erheblich reduziert werden. Dadurch kann die Energieversorgungsvorrichtung geschont und ihre Lebenszeit verlängert werden.

Es ist im Sinne der Erfindung bevorzugt, dass die mindestens eine Zelle in einem Batteriepack der Energieversorgungsvorrichtung angeordnet ist. In dem Batteriepack können vorzugsweise eine Reihe von Einzelzellen zusammengefasst werden und auf diese Weise optimal in die Energieversorgungsvorrichtung eingefügt werden. Beispielsweise können 5, 6 oder 10 Zellen einen Batteriepack bilden, wobei auch ganzzahlige Vielfache dieser Zahlen möglich sind. Beispielsweise kann die Energieversorgungsvorrichtung einzelne Zellstränge aufweisen, die beispielsweise 5, 6 oder 10 Zellen umfassen können. Eine Energieversorgungsvorrichtung mit beispielsweise drei Strängen ä fünf Zellen kann beispielsweise 15 Einzelzellen umfassen.

Es ist im Sinne der Erfindung bevorzugt, dass die Energieversorgungsvorrichtung eine Kapazität von wenigstens 2,2 Ah, bevorzugt wenigstens 2,5 Ah aufweist. Tests haben gezeigt, dass die genannten Kapazitätswerte besonders gut für den Einsatz von leistungsstarken Werkzeugmaschinen im Baugewerbe geeignet sind und den dortigen Anforderungen an Verfügbarkeit von elektrischer Energie und möglicher Nutzungsdauer der Werkzeugmaschine besonders gut entsprechen.

Vorzugsweise ist die mindestens eine Zelle der Energieversorgungsvorrichtung dazu eingerichtet, einen Entladestrom über wenigstens 10 s von wenigstens 20 A abzugeben. Beispielsweise kann eine Zelle der Energieversorgungsvorrichtung dazu ausgebildet sein, einen Entladestrom über wenigstens 10 s von wenigstens 20 A, insbesondere wenigstens 25 A, bereitzustellen. Mit anderen Worten kann die mindestens eine Zelle einer Energieversorgungsvorrichtung dazu eingerichtet sein, einen Dauerstrom von wenigstens 20 A, insbesondere von wenigstens 25 A, bereitzustellen.

Gleichfalls ist es denkbar, dass Spitzenströme, insbesondere kurzzeitige Spitzenströme, zu einer starken Erwärmung der Energieversorgungsvorrichtung führen können. Daher ist eine Energieversorgungsvorrichtung mit einer leistungsstarken Kühlung, wie sie durch die vorliegend beschriebenen Maßnahmen erzielt werden kann, besonders vorteilhaft. Denkbar ist beispielsweise, dass die mindestens eine Zelle der Energieversorgungsvorrichtung über 1 Sekunde hinweg wenigstens 50 A bereitstellen kann. Mit anderen Worten ist es im Sinne der Erfindung bevorzugt, dass die mindestens eine Zelle der Energieversorgungsvorrichtung dazu eingerichtet ist, einen Entladestrom über wenigstens 1 s von wenigstens 50 A bereitzustellen. Werkzeugmaschinen können oftmals kurzzeitig hohe Leistungen benötigen. Eine Energieversorgungsvorrichtung, deren Zellen dazu in der Lage sind, einen derartigen Spitzenstrom und/oder einen derartigen Dauerstrom abzugeben, kann daher besonders geeignet für leistungsstarke Werkzeugmaschinen sein, wie sie auf Baustellen eingesetzt werden.

Es ist im Sinne der Erfindung bevorzugt, dass die mindestens eine Zelle einen Elektrolyten umfasst, wobei der Elektrolyt bei Raumtemperatur vorzugsweise in einem flüssigen Aggregatzustand vorliegt. Der Elektrolyt kann Lithium, Natrium und/oder Magnesium umfassen, ohne darauf beschränkt zu sein. Insbesondere kann der Elektrolyt Lithium-basiert sein. Alternativ oder ergänzend kann er auch Natrium-basiert sein. Denkbar ist auch, dass der Akkumulator Magnesium-basiert ist. Die elektrolyt-basierte Energieversorgungsvorrichtung kann eine Nennspannung von wenigstens 10 V, bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die mindestens eine Zelle der Energieversorgungsvorrichtung kann beispielsweise eine Spannung von 3,6 V aufweisen, ohne darauf beschränkt zu sein.

Es ist im Sinne der Erfindung bevorzugt, dass die Energieversorgungsvorrichtung beispielsweise mit einer Laderate von 1,5 C, bevorzugt 2 C und am meisten bevorzugt von 3 C geladen wird. Unter einer Laderate xC kann dabei die Stromstärke verstanden werden, die benötigt wird, um eine entladene Energieversorgungsvorrichtung in einem dem Zahlwert x der Laderate x C entsprechenden Bruchteil einer Stunde vollständig aufzuladen. Eine Laderate von 3 C ermöglicht beispielsweise ein vollständiges Aufladen des Akkumulators binnen 20 Minuten.

Es ist im Sinne der Erfindung bevorzugt, dass die mindestens Zelle der Energieversorgungsvorrichtung eine Oberfläche A und ein Volumen V aufweist, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

Die Formulierung, dass die Oberfläche A der mindestens einen Zelle ist größer ist als beispielsweise das Achtfache der dritten Wurzel des Quadrats des Volumens V kann vorzugsweise auch durch die Formel ***A***>8****V***^(**2**/**3**) zum Ausdruck gebracht werden. In einer anderen Schreibweise kann dieser Zusammenhang dadurch beschrieben werden, dass das Verhältnis A/V von Oberfläche zu Volumen größer ist als das Achtfache des Kehrwerts der dritten Wurzel des Volumens.

Dabei sind zur Prüfung, ob die obige Relation erfüllt ist, stets Werte in der gleichen Grundeinheit einzusetzen. Wenn beispielsweise ein Wert für die Oberfläche in m² in die obige Formel eingesetzt wird, so wird für das Volumen vorzugsweise ein Wert in der Einheit m³ eingesetzt. Wenn beispielsweise ein Wert für die Oberfläche in der Einheit cm² in die obige Formel eingesetzt wird, so wird für das Volumen vorzugsweise ein Wert in der Einheit cm³ eingesetzt. Wenn beispielsweise ein Wert für die Oberfläche in der Einheit mm² in die obige Formel eingesetzt wird, so wird für das Volumen vorzugsweise ein Wert in der Einheit mm³ eingesetzt.

Zellgeometrien, die beispielsweise die Relation von ***A***>8****V***^(**2**/**3**) erfüllen, weisen vorteilhafterweise ein besonders günstiges Verhältnis zwischen der für die Kühlwirkung maßgeblichen Außenfläche der Zelle zum Zellvolumen auf. Dabei haben die Erfinder erkannt, dass das Verhältnis von Oberfläche zu Volumen der mindestens einen Zelle der Energieversorgungsvorrichtung einen wichtigen Einfluss auf die Entwärmung der Energieversorgungsvorrichtung hat. Die verbesserte Kühlfähigkeit der vorgeschlagenen Energieversorgungsvorrichtung kann vorteilhafterweise durch eine Erhöhung der Zelloberfläche bei gleichbleibendem Volumen und geringem Innenwiderstand der mindestens einen Zelle erreicht werden. Es ist im Sinne der Erfindung bevorzugt, dass eine geringe Zelltemperatur bei gleichzeitig hoher Leistungsabgabe vorzugsweise dann ermöglicht werden kann, wenn der Innenwiderstand der Zelle reduziert wird. Die Reduzierung des Innenwiderstands der mindestens einen Zelle kann zu einer geringeren Wärmeentstehung führen. Darüber hinaus kann eine geringe Zelltemperatur durch die Verwendung von Zellen, bei denen die Oberfläche A von mindestens einer Zelle innerhalb der Energieversorgungsvorrichtung größer ist als das Sechsfache, bevorzugt das Achtfache und besonders bevorzugt das Zehnfache der dritten Wurzel des Quadrats des Volumens V der mindestens einen Zelle. Dadurch kann insbesondere die Wärmeabgabe an die Umgebung verbessert werden.

Es hat sich gezeigt, dass Energieversorgungsvorrichtungen, deren Zellen die genannte Relation erfüllen, deutlich besser gekühlt werden können als bisher bekannte Energieversorgungsvorrichtungen mit beispielsweise zylinderförmigen Zellen. Die obige Relation kann beispielsweise dadurch erfüllt werden, dass die Zellen der vorgeschlagenen Energieversorgungsvorrichtung zwar eine zylinderförmige Grundform aufweisen, aber zusätzliche Oberflächen vergrößernde Elemente auf ihrer Oberfläche angeordnet sind. Dabei kann es sich beispielsweise um Rippen, Zähne oder dergleichen handeln. Es können im Rahmen der Erfindung auch Zellen verwendet werden, die keine zylinderförmige oder zylindrische Grundform aufweisen, sondern vollkommen anders geformt sind. Beispielsweise können die Zellen der vorgeschlagenen Energieversorgungsvorrichtung eine im Wesentlichen quader- oder würfelförmige Grundform aufweisen. Der Begriff "im Wesentlichen" ist dabei für den Fachmann nicht unklar, weil der Fachmann weiß, dass im Kontext der vorliegenden Erfindung beispielsweise auch ein Quader mit Einbuchtungen oder abgerundeten Ecken und/oder Kanten unter den Begriff "im Wesentlichen quaderförmig" fallen soll.

Es ist im Sinne der Erfindung bevorzugt, dass die mindestens eine Zelle einen Zellkern aufweist, wobei kein Punkt innerhalb des Zellkerns mehr als 5 mm von einer Oberfläche der Energieversorgungsvorrichtung entfernt ist. Wenn die Energieversorgungsvorrichtung entladen wird, beispielsweise wenn sie mit einer Werkzeugmaschine verbunden ist und mit der Werkzeugmaschine gearbeitet wird, kann im Zellkern Wärme entstehen. Diese Wärme kann in dieser konkreten Ausgestaltung der Erfindung auf verhältnismäßig kurzem Wege bis zur Oberfläche der Zelle der Energieversorgungsvorrichtung transportiert werden. Von der Oberfläche kann die Wärme optimal abgeführt werden. Somit kann eine solche Energieversorgungsvorrichtung eine gute Kühlung, insbesondere eine vergleichsweise gute Selbstkühlung, aufweisen. Die Zeitdauer bis zum Erreichen der Grenztemperatur kann verlängert und/oder das Erreichen der Grenztemperatur vorteilhafterweise gänzlich vermieden werden. Als weiterer Vorteil der Erfindung kann Innerhalb des Zellkerns eine verhältnismäßig homogene Temperaturverteilung erreicht werden. Hierdurch kann sich eine gleichmäßige Alterung des Akkumulators ergeben. Dies wiederum kann die Lebensdauer der Energieversorgungsvorrichtung erhöhen.

Es ist im Sinne der Erfindung bevorzugt, dass die mindestens eine Zelle eine maximale Konstant-Strom-Abgabe von größer als 20 Ampère, bevorzugt größer als 30 Ampère, am meisten bevorzugt größer 40 Ampère aufweist. Die maximale Konstant-Strom-Abgabe ist die Menge an Strom einer Zelle oder einer Energieversorgungsvorrichtung, die entnommen werden kann, ohne dass die Zelle oder die Energieversorgungsvorrichtung an eine Temperatur-Obergrenze gelangt. Mögliche Temperatur-Obergrenze können in einem Bereich von 60 °C oder 70 °C liegen, ohne darauf beschränkt zu sein. Die Einheit der maximalen Konstant-Strom-Abgabe ist Ampère.

Bei allen Wertebereichen, die im Kontext der vorliegenden Erfindung genannt werden, sollen stets auch alle Zwischenwerte als offenbart gelten. Als Beispiel sollen bei der maximalen Konstant-Strom-Abgabe auch Werte zwischen 20 und 30 A als offenbart gelten, also zum Beispiel 21; 22,3; 24, 25,55 oder 27,06 Ampère usw. Darüber hinaus sollen auch Werte zwischen 30 und 40 A als offenbart gelten, also zum Beispiel 32; 33,3; 36, 38,55 oder 39,07 Ampère usw.

Es ist im Sinne der Erfindung bevorzugt, dass die Energieversorgungsvorrichtung eine Entlade-C-Rate von größer als 80 · t^(-0,45) aufweist, wobei der Buchstabe "t" für die Zeit in der Einheit Sekunden steht. Die C-Rate ermöglicht vorteilhafterweise eine Quantifizierung der Lade- und Entladeströme für Energieversorgungsvorrichtungen, wobei die hier verwendete Enlade-C-Rate insbesondere die Quantifizierung der Entladeströme von Energieversorgungsvorrichtungen ermöglicht. Mit der C-Rate können beispielsweise die maximal zulässigen Lade- und Entladeströme angegeben werden. Diese Lade- und Entladeströme hängen vorzugsweise von der Nennkapazität der Energieversorgungsvorrichtung ab. Die ungewöhnlich hohe Entlade-C-Rate von 80 · t^(-0,45) bedeutet vorteilhafterweise, dass mit der vorgeschlagenen Energieversorgungsvorrichtung besonders hohe Entladeströme erreicht werden können, die für den Betrieb von leistungsstarken Werkzeugmaschinen im Baugewerbe erforderlich sind. Beispielsweise können die Entladeströme in einem Bereich von größer als 40 Ampère, bevorzugt größer als 60 Ampère oder noch mehr bevorzugt größer als 80 Ampère liegen.

Es ist im Sinne der Erfindung bevorzugt, dass die Zelle einen Zelltemperaturgradienten von kleiner 10 Kelvin aufweist. Der Zelltemperaturgradient ist vorzugsweise ein Maß für Temperaturunterschiede innerhalb der mindestens einen Zelle der vorgeschlagenen Energieversorgungsvorrichtung, wobei es im Sinne der Erfindung bevorzugt ist, dass die Zelle eine möglichst gleichmäßige Temperaturverteilung aufweist, d.h. dass eine Temperatur in einem inneren Bereich der Zelle möglichst wenig abweicht von einer Temperatur, die im Bereich einer Mantel- oder Außenfläche der Zelle gemessen wird.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Figur 1: einen Querschnitt durch ein erfindungsgemäßes System enthaltend eine Werkzeugmaschine mit einem angeschlossenen Akkumulator als Energieversorgung;
- Figur 2: einen Querschnitt durch ein Fussteil der erfindungsgemäßen Werkzeugmaschine mit einem angeschlossenen Akkumulator;
- Figur 3: eine erste grafische Darstellung der verschiedenen Spannungspegel in einem ersten und zweiten Zustand bei der differentiellen Kommunikation in dem erfindungsgemäßen System;
- Figur 4: eine zweite grafische Darstellung der verschiedenen Spannungspegel in dem ersten und zweiten Zustand bei der differentiellen Kommunikation in dem erfindungsgemäßen System;
- Figur 5: eine dritte grafische Darstellung der verschiedenen Spannungspegel in dem ersten und zweiten Zustand bei der differentiellen Kommunikation in dem erfindungsgemäßen System;
- Fig. 6: eine grafische Darstellung der Bedeutung von Signalstörungen bei unterschiedlich großen Flächen, die von den Kommunikationsleitungen eingeschlossen werden; und
- Fig. 7: weitere grafische Darstellung der Bedeutung von Signalstörungen bei unterschiedlich großen Flächen, die von den Kommunikationsleitungen eingeschlossen werden.
- Fig. 8: schematische Seitenansicht einer bevorzugten Ausgestaltung der Energieversorgungsvorrichtung
- Fig. 9: schematische Seitenansicht einer Werkzeugmaschine mit einer bevorzugten Ausgestaltung der Energieversorgungsvorrichtung

### Ausführungsbeispiele und Figurenbeschreibung:

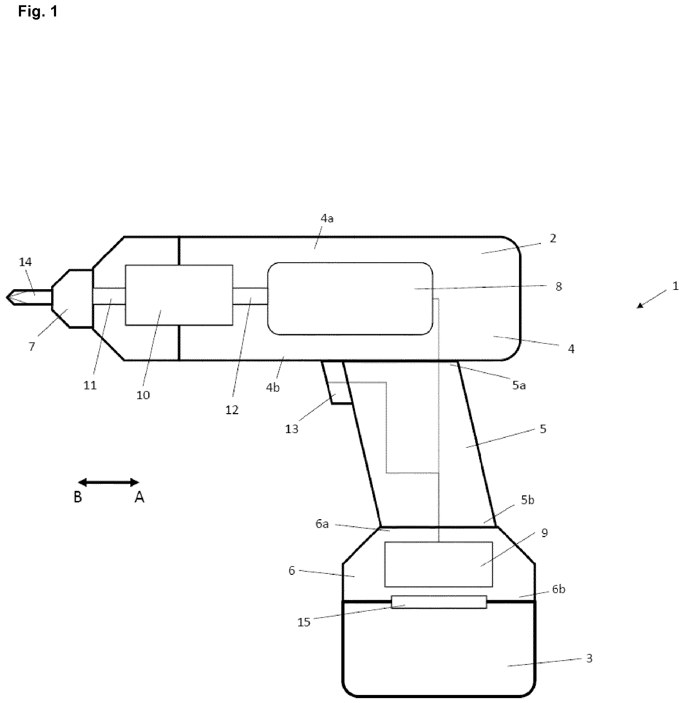

In Figur 1 ist ein erfindungsgemäßes System 1 mit einer Werkzeugmaschine 2 und einem Ackumulator 3 dargestellt. Der Akkumulator 3, der auch als Energieversorgungsvorrichtung bezeichnet werden kann, ist mit der Werkzeugmaschine verbunden und dient zur Versorgung der elektrischen Verbraucher der Werkzeugmaschine 2 mit elektrischer Energie. Bei der Versorgung fließt elektrischer Strom von dem Akkumulator 3 zu der Werkzeugmaschine 2. Der Akkumulator kann darüber hinaus auch als Akku oder Batterie bezeichnet werden.

Wie in Figur 1 dargestellt, ist die Werkzeugmaschine 2 in Form eines Akku-Schraubers dargestellt. Gemäß anderer alternativer Ausführungsformen kann die Werkzeugmaschine 2 auch in Form einer Bohrmaschine, einer Säge, eines Schleifgeräts oder dergleichen ausgestaltet sein.

Die als Akku-Schrauber ausgestaltete Werkzeugmaschine 2 enthält im Wesentlichen ein Gehäuse 4, ein Handgriff 5, ein Fussteil 6, eine Werkzeugaufnahme 7, einen elektrischen Antrieb 8 in Form eines Elektromotors, eine Steuerungseinrichtung 9, ein Getriebe 9a, eine Antriebswelle 11, eine Abtriebswelle 12 und einen Aktivierungsschalter 13.

Der als Elektromotor ausgestaltet elektrische Antrieb 8, das Getriebe 10, die Antriebswelle 11, die Abtriebswelle 12 und die Steuerungseinrichtung 9 sind in dem Gehäuse 4 positioniert. Der Antrieb 8, das Getriebe 10, die Antriebswelle 11 und die Abtriebswelle 12 sind so zueinander und in dem Gehäuse 10 positioniert, dass ein von dem Antrieb 8 erzeugtes Drehmoment an die Abtriebswelle 12 übertragen wird. Die Abtriebswelle 12 überträgt das Drehmoment auf das Getriebe 10, welches wiederum ein Drehmoment an die Antriebswelle 11 weitergibt. Über die Antriebswelle 11 wird durch Übertragung des Drehmoments die Werkzeugaufnahme 7 angetrieben. Wie in Figur 1 dargestellt, ist in der Werkzeugaufnahme 7 ein Werkzeug 14 in Form eines Bits gehalten. Mit Hilfe des Bits kann eine Schraube in einen Werkstoff eingeschraubt werden. Weder die Schraube noch der Werkstoff sind in den Figuren dargestellt.

Wie weiterhin in Figur 1 gezeigt, enthält das Gehäuse 4 eine Oberseite 4a und eine Unterseite 4b. Der Handgriff 5 enthält ein erstes Ende 5a und ein zweites Ende 5b. An der Unterseite 4b des Gehäuses 4 ist das erste Ende 5a des Handgriffs 5 befestigt. Des Weiteren enthält das Fussteil 6 ein oberes Ende 6a und ein unteres Ende 6b. Das obere Ende 6a des Fussteils 6 ist an dem zweiten Ende 5b des Handgriffs 5 befestigt. Das untere Ende 6b des Fussteils 6 enthält eine mechanische, elektrische und elektronische Schnittstelle 15 und dient zum mechanischen, elektrischen und elektronischen Verbinden mit dem Akkumulator 3. Zur Aufnahme von elektrischen Strom enthält die Schnittstelle 15 eine Anzahl an Stromanschlüssen 16. Die Schnittstelle 15 enthält darüber hinaus Datenanschlüsse 17 zum Senden und Empfangen von Signalen zwischen der Werkzeugmaschine 2 und dem Akkumulator 3.

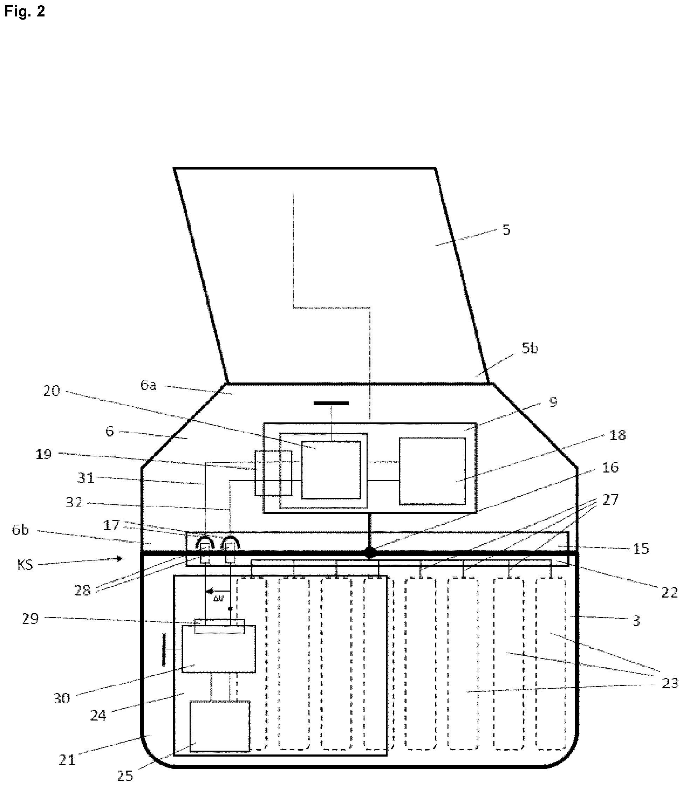

Wie den Figuren 1 und 2 zu entnehmen ist, ist die Steuerungseinrichtung 9 der Werkzeugmaschine 2 in dem Fussteil 6 der Werkzeugmaschine 2 positioniert. Die Steuerungseinrichtung 9 der Werkzeugmaschine 2 dient zum Steuern und Regeln verschiedener Vorgänge in Bezug auf die Werkzeugmaschine 2 sowie in Bezug auf den Akkumulator 3. Die Steuerungseinrichtung 9 steuert insbesondere den Strom bzw. die Stromstärke, die von dem Akkumulator 3 zu der Werkzeugmaschine 2 und insbesondere zum Antreiben des als Elektromotor ausgebildeten Antriebs 8 fließt.

Die Steuerungseinrichtung 9 der Werkzeugmaschine 2 enthält dabei einen Mikrocontroller 18 (auch als MCU bezeichnet) sowie eine Datenschnittstelle 19 mit einem ersten Transceiver 20 als Bestandteil eines Kommunikationsschaltkreises KS für eine serielle, digitale Kommunikation zwischen dem Akkumulator 3 und der Werkzeugmaschine 2. Die Datenschnittstelle 19 der Werkzeugmaschine 2 ist dabei eine von insgesamt zwei Datenschnittstellen zu dem Kommunikationsschaltkreis KS für die serielle, digitale Kommunikation zwischen dem Akkumulator 3 und der Werkzeugmaschine 2. Wie nachfolgend noch beschreiben ist enthält der Akkumulator 3 die andere der beiden Datenschnittstelle 29.

Der Akkumulator 3 enthält im Wesentlichen ein Gehäuse 21 mit einer Akku-Schnittstelle 22. In dem Gehäuse 21 des Akkumulators 3 sind eine Vielzahl an Energiespeicherzellen 23 sowie eine Steuerungselektronik 24 mit einem Mikrocontroller 25.

Der Akkumulator 3 enthält des Weiteren eine Datenschnittstelle 29 mit einem zweiten Transceiver 30 als Bestandteil eines Kommunikationsschaltkreises KS für eine serielle, digitale Kommunikation zwischen dem Akkumulator 3 und der Werkzeugmaschine 2.

Die Energiespeicherzellen 23 können auch als Akku-Zellen bezeichnet werden und dienen zum Aufnehmen, Speichern und Bereitstellen einer elektrischen Energie bzw. einer elektrischen Spannung.

Die Akku-Schnittstelle 22 ist an einer Seite des Gehäuses 21 positioniert. Die Akku-Schnittstelle 22 enthält eine Anzahl an Stromsteckern 27 zum Aufnehmen und Abgeben von elektrischem Strom sowie Datensteckern 28 zum Senden und Empfangen von Signalen zwischen der Werkzeugmaschine 2 und dem Akkumulator 3. Über die Stromstecker 27 kann der elektrische Strom von den Energiespeicherzellen 23 abgegeben werden.

Wie in Figur 1 und 2 gezeigt, sind die Stromstecker 27 des Akkumulators 3 mit den Stromanschlüssen 16 der Werkzeugmaschine 2 verbunden. Ebenso sind die Datenstecker 28 des Ackumulators 3 mit den Datenanschlüssen 17 der Werkzeugmaschine 2 verbunden.

Durch die Verbindung kann elektrischer Strom von den Energiespeicherzellen 23 des Akkumulators 3 zu der Werkzeugmaschine 2 fließen. Des Weiteren können Signale zur Kommunikation zwischen der Energieversorgungsvorrichtung 3 und der Werkzeugmaschine 2 ausgetauscht werden.

Wie der Figur 1 zu entnehmen ist, ist der Aktivierungsschalter 13 an einer 5c Vorderseite des Handgriffs 5 positioniert. Durch ein Bewegen des Aktivierungsschalters 13 in Richtung A kann ein Signal von dem Aktivierungsschalter 13 an die Steuerung 9 gesendet werden, wodurch die Steuerung 9 wiederum ein Signal an die Steuerungselektronik 24 des Akkumulators 3 sendet. Durch das an die Steuerungselektronik 24 gesendete Signal wird elektrische Energie bzw. elektrischer Strom mit einem bestimmten Stromwert von dem Akkumulator 3 für den elektrischen Verbraucher der Werkzeugmaschine 2 und insbesondere den als Elektromotor ausgebildeten Antrieb 8 freigegeben. Die Werkzeugmaschine 2 hat eine (nicht gezeigte) Stromeinrichtung, mit der die Stromstärke des Versorgungstroms gemessen werden kann. Wenn ein Versorgungsstrom mit einer zulässigen Stromstärke gemessen wird, kann der Versorgungsstrom zu den elektrischen Verbrauchern der Werkzeugmaschine 2 fliessen. Alternativ oder zusätzlich kann die Strommesseinrichtung auch in dem Akkumulator 3 positioniert sein. Es ist im Sinne der Erfindung bevorzugt, dass die Werkzeugmaschine 2 und die Energieversorgungsvorrichtung 3 Stromleitungen 26 zur Leitung eines elektrischen Stroms umfassen.

Um ein Signal entsprechend der Wegstrecke des Aktivierungsschalters 13 in Richtung A an die Steuerung 9 zu senden, enthält der Aktivierungsschalter 13 ein nicht gezeigtes Potentiometer, auch Poti genannt.

Wenn sich der Aktivierungsschalter 13 wieder in Richtung B bewegt, wird ein entsprechendes Signal mit Hilfe des (nicht gezeigten) Potentiometers an die Steuerung 9 gesendet, sodass kein elektrischer Strom (und damit keine elektrische Energie) mehr vom Akkumulator 3 zu der Werkzeugmaschine 2 fließt.

Die serielle, digitale Kommunikation zwischen dem Akkumulator 3 und der Werkzeugmaschine 2 erfolgt über einen Kommunikationsschaltkreis KS. Zur Teilnahme an dem Kommunikationsschaltkreis KS enthält sowohl der Akkumulator 3 als auch die Werkzeugmaschine 2 jeweils eine Datenschnittstelle 19, 29 mit einem Transceiver 20, 30. Die Transceiver 20, 30 können dabei als CAN-Transceiver ausgestaltet sein. Wie in Figur 2 angedeutet ist der Transceiver 20 der Werkzeugmaschine über die Datenschnittstelle und einer ersten Kommunikationsleitung 31 (auch als COM-High-Leitung bezeichnet) sowie einer zweiten Kommunikationsleitung 32 (auch als COM-Low-Leitung bezeichnet) und der Datenschnittstelle 29 mit dem Transceiver 30 des Akkumulators 3 verbunden.

Gemäß einer alternativen Ausgestaltungsform der vorliegenden Erfindung, welche nicht in den Figuren dargestellt ist, kann der Kommunikationsschaltkreis KS mit einem ersten und zweiten Transceiver leidglich in dem Gehäuse 4 der Werkzeugmaschine 2 positioniert sein. Hierdurch findet die differentielle Kommunikation lediglich innerhalb der Werkzeugmaschine, d.h. zwischen Komponenten der Werkzeugmaschine 2 statt.

Der Transceiver 20 der Werkzeugmaschine 2 kann Signale (z.B. ein Bit) über die Datenschnittstelle 19, die erste und zweite Kommunikationsleitung 31, 32 an die Datenschnittstelle 29 und den Transceiver 30 des Akkumulators 3 senden.

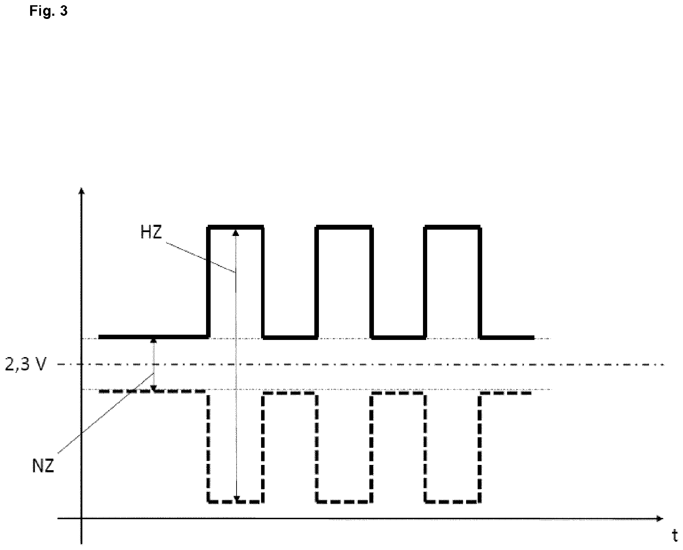

Wie in den Figuren 3 bis 5 dargestellt, wird zum Senden eines Signals in Form eines Bits über den Kommunikationsschaltkreis KS sowohl die COM-High-Leitung 31 als auch die COM-Low-leitung 32 in einen ersten Zustand HZ versetzt. Der erste Zustand HZ für die COM-High-Leitung 31 und für die COM-Low-leitung 32 ist der hohe Zustand, d.h. bei dem eine erste Differenzspannung zwischen 1,5 und 3 Volt beträgt. In dem Ausführungsbeispiel in Figur 3 beträgt dabei die erst Differenzspannung für den ersten (hohen) Zustand HZ 3 Volt.

Die in den Figuren 3 bis 5 gezeigten Ausführungsbeispiele der Erfindung betreffen insbesondere eine differentielle Kommunikation mit zwei Kommunikationsleitungen 31, 32 zwischen den Transceivern 20, 30, die miteinander Daten und/oder Signale austauschen sollen.

Der zweite Zustand NZ für die COM-High-Leitung 31 und für die COM-Low-leitung 32 ist der niedrige Zustand, d.h. bei dem eine zweite Differenzspannung zwischen -0,5 und 0,5 Volt beträgt. Ein optimaler Wert für die zweite Differenzspannung ist dabei 0 Volt. In dem Ausführungsbeispiel in Figur 3 beträgt die zweite Differenzspannung für den zweiten (niedrigen) Zustand NZ 0,5 Volt.

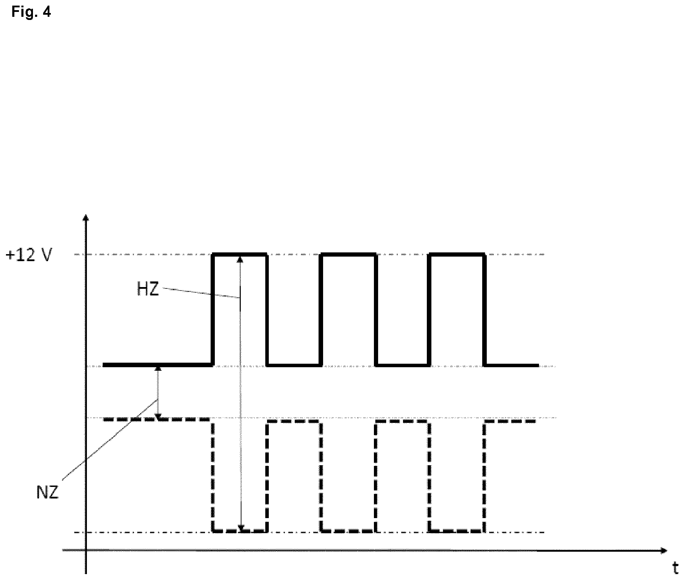

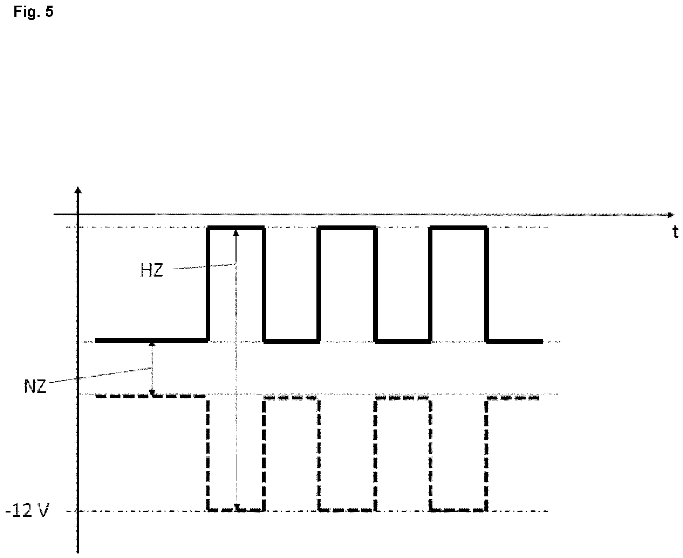

Wie entsprechend in den Figuren 4 und 5 dargestellt kann der maximale Spannungswert in dem ersten Zustand bis zu 12 Volt (d.h. -12 Volt oder +12 Volt) gegenüber dem Massepotential des Akkumulators 3.

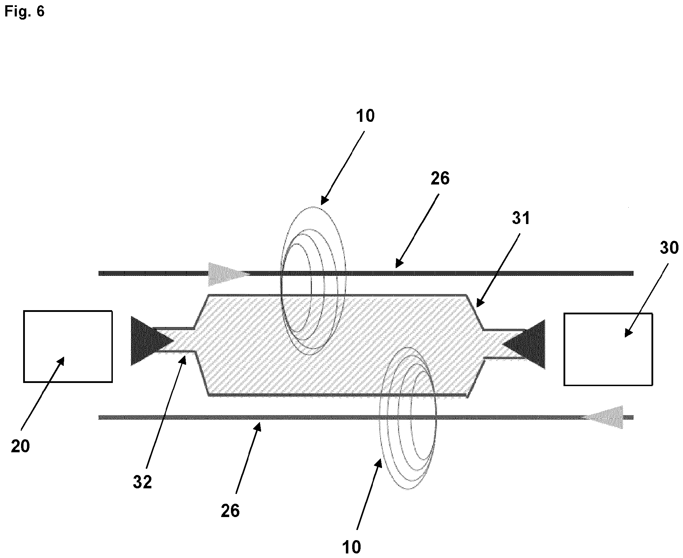

Fig. 6 zeigt eine grafische Darstellung der Bedeutung von Signalstörungen 10 bei unterschiedlich großen Flächen, die von den Kommunikationsleitungen 31, 32 eingeschlossen werden. Die Kommunikationsleitungen 31, 32 verlaufen zwischen dem ersten Transceiver 20 und dem zweiten Transceiver 30, wobei der erste Transceiver 20 vorzugsweise Bestandteil der Werkzeugmaschine 2 sein kann, während der zweite Transceiver 30 an der Energieversorgungsvorrichtung 3 angeordnet vorliegt. Darüber hinaus sind in Fig. 6 Stromleitungen 26 dargestellt, durch die elektrischer Strom I fließen kann. In dem in Fig. 6 dargestellten Kommunikationssystem schließen die Kommunikationsleitungen 31, 32 eine große Fläche miteinander ein, so dass Signalstörungen 10 erhebliche Auswirkungen auf die Kommunikation zwischen dem ersten Transceiver 20 und dem zweiten Transceiver 30 haben. Diese Signalstörungen 10 wirken sich insbesondere durch starke induktive Einkopplungen in die Kommunikationsleitungen 31, 32 aus.

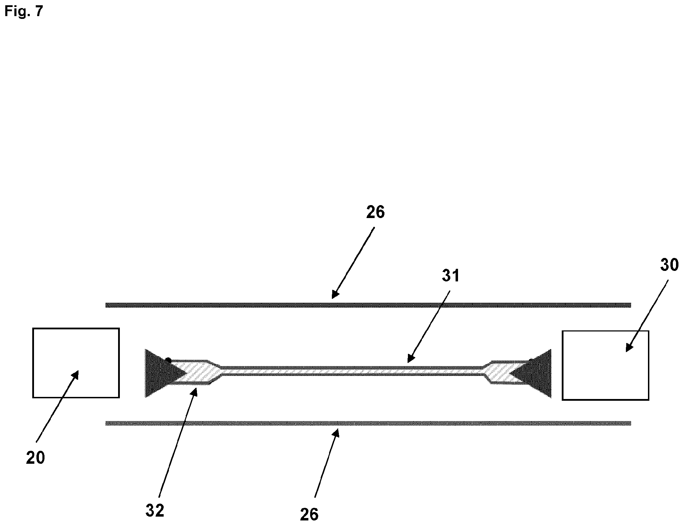

Fig. 7 zeigt eine grafische Darstellung einer mehr bevorzugten Ausgestaltung der vorgeschlagenen Werkzeugmaschine 2, bei der ein kleinerer Abstand zwischen den Kommunikationsleitungen 31, 32 besteht bzw. bei der eine kleinere Fläche von den Kommunikationsleitungen 31, 32 eingeschlossen wird. Wie aus Fig. 7 im Vergleich zu Fig. 6 hervorgeht, ist bei einer solchen Ausgestaltung des Kommunikationsschaltkreises KS der Einfluss von Signalstörungen 10 auf die serielle, digitale Kommunikation erheblich reduziert und Daten und/oder Signale können besonders störungsfrei und robust zwischen den Kommunikationspartnern, wie Werkzeugmaschine 2 und Akkumulator 3 ausgetauscht werden. Es ist im Sinne der Erfindung ganz besonders bevorzugt, dass eine Fläche, die von den Kommunikationsleitungen 31, 32 umschlossen werden kann, kleiner als 20 cm² ist, wenn mehr als eine Kommunikationsleitung für die serielle digitale Kommunikation verwendet wird.

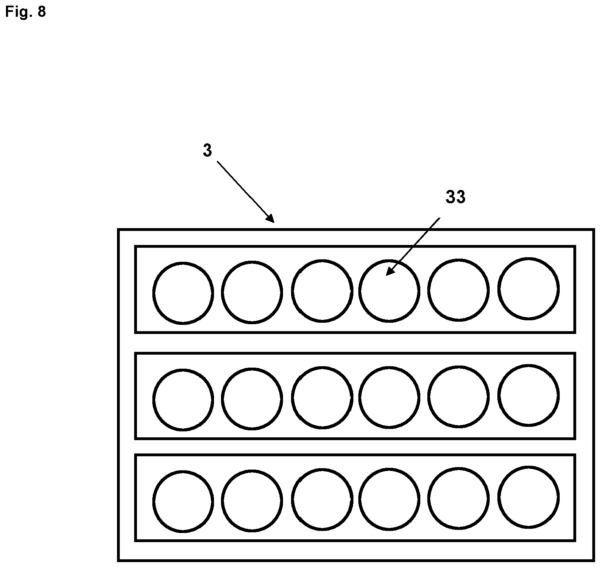

Figur 8 zeigt eine schematische Seitenansicht einer bevorzugten Ausgestaltung der Energieversorgungsvorrichtung 3. Die in Fig. 8 dargestellte Energieversorgungsvorrichtung 3 weist achtzehn Zellen 33 auf, wobei die achtzehn Zellen 33 in drei Strängen innerhalb der Energieversorgungsvorrichtung 3 angeordnet vorliegen. Die Zellen 33 werden insbesondere durch die Kreise symbolisiert, während die Stränge durch die länglichen Rechtecke symbolisiert werden, die die Kreise («Zellen 33») umgeben.

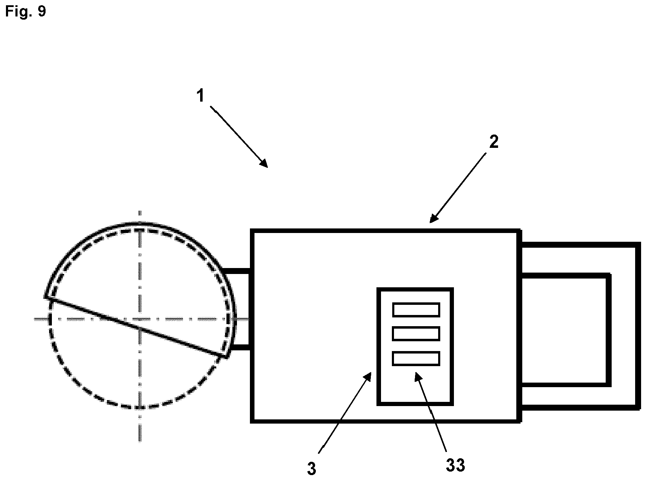

Fig. 9 zeigt eine schematische Ansicht einer Werkzeugmaschine 2 mit einer vorgeschlagenen Energieversorgungsvorrichtung 3. Bei der Werkzeugmaschine 2 kann es sich beispielsweise um einen Trennschleifer handeln, der als Werkzeug eine Trennscheibe aufweist. Die Werkzeugmaschine 2 kann einen Griff aufweisen, der beispielsweise als hinterer Handgriff ausgebildet ist. Darüber hinaus kann die Werkzeugmaschine 2 in an sich bekannter Weise Bedienelemente, wie Schalter oder Knöpfe, aufweisen. Außerdem kann die Werkzeugmaschine 2 einen Motor (nicht dargestellt) aufweisen, der einen Verbraucher darstellen und von der Energieversorgungsvorrichtung 3 mit elektrischer Energie versorgt werden kann. Die Energieversorgungsvorrichtung 3 weist in dem schematischen Ausführungsbeispiel des vorgeschlagenen Systems 1 aus Werkzeugmaschine 2 und Energieversorgungsvorrichtung 3 drei Energiespeicherzellen 33 auf.

### Bezugszeichenliste

- 1: System
- 2: Werkzeugmaschine
- 3: Akkumulator
- 4: Gehäuse
- 5: Handgriff
- 5a: erstes Ende des Handgriffs
- 5b: zweites Ende des Handgriffs
- 5c: Vorderseite des Handgriffs
- 6: Fussteil
- 6a: oberes Ende des Fussteils
- 6b: unteres Ende des Fussteils
- 7: Werkzeugaufnahme
- 8: elektrischer Antrieb, z.B. Elektromotor
- 9: Steuerungseinrichtung
- 9a: Getriebe
- 10: Signalstörung
- 11: Antriebswelle
- 12: Abtriebswelle
- 13: Aktivierungsschalter
- 14: Werkzeug
- 15: Schnittstelle
- 16: Stromanschlüsse
- 17: Datenanschlüsse
- 18: Mikrocontroller
- 19: erste Datenschnittstelle, beispielsweise an der Werkzeugmaschine
- 20: erster Transceiver
- 21: Gehäuse
- 22: Akku-Schnittstelle
- 23: Energiespeicherzellen
- 24: Steuerungselektronik
- 25: Mikrocontroller
- 26: Stromleitung
- 27: Stromstecker
- 28: Datenstecker
- 29: zweite Datenschnittstelle, beispielsweise an der Energieversorgungsvorrichtung
- 30: zweiter Transceiver
- 31: erste Kommunikationsleitung, "COM-High-Leitung"
- 32: zweite Kommunikationsleitung, "COM-Low-Leitung"
- 33: Energiespeicherzelle der Energieversorgungsvorrichtung
- KS: Kommunikationsschaltkreis
- HZ: erster Zustand
- NZ: zweiter Zustand

## Patentansprüche

1. Werkzeugmaschine (2) mit wenigstens einer Steuerungseinrichtung (9),
**gekennzeichnet durch**
wenigstens einen Kommunikationsschaltkreis (KS) zum Austausch von Signalen zwischen einem ersten einem ersten Transceiver (20) und einem zweiten Transceiver (30) mit mindestens einer Kommunikationsleitung (31) für eine serielle digitale Kommunikation.

2. Werkzeugmaschine (2) nach Anspruch 1,
**dadurch gekennzeichnet, dass**
der Austausch von Signalen in einem Halbduplex-Betrieb oder in einem Vollduplex-Betrieb erfolgt.

3. Werkzeugmaschine (2) nach Anspruch 1 oder 2,
**dadurch gekennzeichnet, dass**
der Austausch von Signalen massebezogen erfolgt.

4. Werkzeugmaschine (2) nach Anspruch 1 oder 2,
**dadurch gekennzeichnet, dass**
der Austausch von Signalen im Rahmen einer differentiellen Kommunikation erfolgt.

5. Werkzeugmaschine (2) nach Anspruch 4
**dadurch gekennzeichnet, dass**
eine erste Differenzspannung bei der differentiellen Kommunikation für einen ersten Zustand (HZ) zwischen -20 V bis 1 Volt liegt und eine zweite Differenzspannung für einen zweiten Zustand zwischen 1,5 bis 20 Volt liegt.

6. Werkzeugmaschine (2) nach einem der vorhergehenden Ansprüche,
**dadurch gekennzeichnet, dass**
die Werkzeugmaschine (2) lösbar mit einer Energieversorgungsvorrichtung (3) verbindbar ist.

7. Werkzeugmaschine (2) nach Anspruch 6,
**dadurch gekennzeichnet, dass**
der erste Transceiver (20) in der Werkzeugmaschine (2) und der zweite Transceiver (30) in der Energieversorgungsvorrichtung (3) positioniert ist.

8. Werkzeugmaschine (2) nach einem der vorhergehenden Ansprüche,
**dadurch gekennzeichnet, dass**
eine Datenübertragungsrate in einem Bereich von 9,6 KBit/s bis 5 MBit/s liegt.

9. Werkzeugmaschine (2) nach einem der vorhergehenden Ansprüche,
**dadurch gekennzeichnet, dass**
ein Widerstand der mindestens einen Kommunikationsleitung (31) kleiner als 1 Ohm ist.

10. Werkzeugmaschine (2) nach einem der vorhergehenden Ansprüche,
**dadurch gekennzeichnet, dass**
die Kommunikationsleitungen (31, 32) verdrillt vorliegen, wenn mehr als eine Kommunikationsleitung (31) für die serielle digitale Kommunikation verwendet wird.

11. Werkzeugmaschine (2) nach einem der vorhergehenden Ansprüche,
**dadurch gekennzeichnet, dass**
Abstände zwischen Leitungskreuzungspunkten zwischen den Kommunikationsleitungen (31, 32) in einem Bereich von 5 mm bis 25 mm liegen, wenn mehr als eine Kommunikationsleitung (31) für die serielle digitale Kommunikation verwendet wird.

12. Werkzeugmaschine (2) nach einem der vorhergehenden Ansprüche,
**dadurch gekennzeichnet, dass**
eine Fläche, die von den Kommunikationsleitungen (31, 32) umschließbar ist, kleiner als 20 cm² ist, wenn mehr als eine Kommunikationsleitung (31) für die serielle digitale Kommunikation verwendet wird.

13. Werkzeugmaschine (2) nach einem der Ansprüche 1 bis 9
**dadurch gekennzeichnet, dass**
die serielle digitale Kommunikation auf einer Nahfeld-Kommunikation beruht.

14. Werkzeugmaschine (2) nach einem der Ansprüche 1 bis 9 oder 13
**dadurch gekennzeichnet, dass**
eine Antennenfläche des ersten Transceivers (20) und/oder des zweiten Transceivers (30) in einem Bereich von 4 cm² bis 20 cm² liegt und/oder ein ein Abstand zwischen Antennen des ersten Transceivers (20) und den Antennen des zweiten Transceivers (30) kleiner als 4 cm ist.

15. System (1) umfassend eine Werkzeugmaschine (2) nach einem der vorhergehenden Ansprüche und eine Energieversorgungsvorrichtung (3), wobei die Energieversorgungsvorrichtung (3) lösbar mit der Werkzeugmaschine (2) verbindbar ist,
**dadurch gekennzeichnet, dass**
die Energieversorgungsvorrichtung (3) mindestens eine Energiespeicherzelle (33) aufweist, wobei die Energiespeicherzelle (33) einen Innenwiderstand DCR_I von kleiner als 10 Milliohm aufweist und/oder wobei die mindestens eine Energiespeicherzelle (33) eine Oberfläche A und ein Volumen V aufweist, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.
